# EUROPÄISCHE PATENTSCHRIFT

(11) **EP 2 700 608 B1**
(45) Veröffentlichungstag und Bekanntmachung des Hinweises auf die Patenterteilung: **20.01.2016**
(21) Anmeldenummer: 13176140.5
(22) Anmeldetag: 11.07.2013
(51) Int. Cl.: B66F 3/44, B66F 3/10, B66F 7/14

(54) **Montageplatte und Hubsäule**
Mounting plate and lifting column
Plaque de montage et colonne élévatrice

(30) Priorität: 24.08.2012 DE 102012215131
(43) Veröffentlichungstag der Anmeldung: 26.02.2014
(73) Patentinhaber: Aktiebolaget SKF, 415 50 Göteborg (SE)
(72) Erfinder: Panzer, Hans-Peter, 79540 Lörrach (DE); Voegelin, Martin, 4434 Hölstein (CH)
(74) Vertreter: Schonecke, Mitja

(56) Entgegenhaltungen:
- EP-A1- 1 674 764
- WO-A1-01/74198
- WO-A1-2008/012201
- DE-U1- 8 515 755

## Beschreibung

Ausführungsbeispiele beziehen sich auf eine Montageplatte zum Montieren einer Hubeinheit in einer Führungsrohreinheit einer Hubsäule und auf eine entsprechende Hubsäule. Hubsäulen werden beispielsweise bei Behindertenstühlen, Patientenliegen, medizinischen Geräten und industriellen Anwendungen zum Einsatz gebracht.

Hubsäulen, die auch Teleskopsäulen oder Teleskopantriebe genannt werden, werden in einer Vielzahl technischer Gebiete eingesetzt. Zu diesen zählen unter anderem Patientenliegen, Behindertenstühle, aber auch andere medizinische Anwendungen. Ebenso werden sie jedoch auch außerhalb des medizinischen Sektors eingesetzt, beispielsweise um Maschinenteile oder andere Komponenten entlang einer Bewegungsrichtung verfahren zu können.

Hubsäulen umfassen so im Allgemeinen wenigstens zwei röhrenförmige oder säulenförmige Führungsrohrsegmente, die konzentrisch ineinander einführbar und zueinander entlang einer Erstreckungsrichtung bewegbar sind, wobei die Erstreckungsrichtung mit der zuvor genannten Bewegungsrichtung meist zusammenfällt. Hierdurch kann die Länge der Hubsäule verändert werden.

Die genaue Konfiguration einer solchen Hubsäule hängt jedoch von einer Vielzahl verschiedener Faktoren ab, zu denen beispielsweise der geplante Einsatz ebenso, wie auch die Verlegung elektrischer, hydraulischer oder anderer Zu- und Ableitungen zählt. Je nach konkreter Anwendung können so auch bei ansonsten identischen Einzelkomponenten unterschiedliche Hubsäulen erforderlich oder ratsam sein. So kann es je nach konkretem Anwendungsfall beispielsweise wünschenswert sein, ein von den wenigstens zwei Führungsrohrsegmenten inneres Führungsrohrsegment im Falle einer vertikalen Montage der Hubsäule oberhalb, gegebenenfalls jedoch auch unterhalb eines entsprechenden äußeren Führungsrohrsegments anzuordnen. Unabhängig von dieser Frage kann es jedoch geschehen; dass ein Antriebsmotor einer in der Hubsäule integrierten Hubeinheit, welche dazu dient, die Länge der Hubsäule parallel zu der Erstreckungsrichtung zu verändern, an einem oberen oder einem unteren Ende der Hubsäule montiert werden sollte.

Die WO 01/74198 A1 bezieht sich auf eine Hubsäule mit einem höhenverstellbaren Mobilstück, wie es beispielsweise für Betten und Tische eingesetzt wird. Die Hubsäule umfasst eine Antriebseinheit, wobei eine Verlängerung der Säule zumindest mit einem flexiblen Element, wie beispielsweise einer Kette, einem Riemen oder dergleichen bewirkt wird, die über einer Riemenscheibe läuft. Die Säule besteht aus zwei starr miteinander verbundenen Riemenscheiben und zwei weiteren Riemenscheiben, die so angeordnet sind, dass die vier Riemenscheiben zwei Paare bilden.

Es besteht so ein Bedarf daran, eine Herstellung einer Hubsäule zu vereinfachen und/oder flexibler zu gestalten.

Diesem Bedarf trägt eine Hubsäule gemäß Patentanspruch 1 Rechnung.

Eine-Montageplatte gemäß einem Ausführungsbeispiel zum Montieren einer Hubeinheit in einer Führungsrohreinheit mit wenigstens zwei Führungsrohrsegmenten, wobei die Hubeinheit ausgebildet ist, um eine Länge der Hubsäule parallel zu einer Erstreckungsrichtung zu verändern, und wobei die wenigstens zwei Führungsrohrsegmente im Wesentlichen konzentrisch ineinander einführbar und zueinander entlang der Erstreckungsrichtung bewegbar sind, um die Länge der Hubsäule veränderbar zu machen, umfasst eine Motoraufnahmestruktur für einen Antriebsmotor der Hubeinheit und eine von der Motoraufnahmestruktur verschiedene Aufnahmestruktur für eine drehfest mit der Montageplatte zu verbindenden Haltekomponente der Hubeinheit, wobei die Haltekomponente an einer dem Antriebsmotor abgewandten Seite der Hubeinheit angeordnet ist.

Einer Montageplatte gemäß einem Ausführungsbeispiel liegt so die Erkenntnis zugrunde, dass eine Herstellung einer Hubsäule dadurch vereinfacht oder flexibler gestaltet werden kann, indem eine Montageplatte gemäß einem Ausführungsbeispiel herangezogen wird, die sowohl eine Motoraufnahmestruktur wie auch eine Aufnahmestruktur für die Haltekomponente der Hubeinheit umfasst, obwohl häufig nur eine der beiden verwendet wird. Hierdurch kann es gegebenenfalls möglich sein, die eigentliche Hubsäule mit ihren Führungsrohrsegmenten und die Hubeinheit im Wesentlichen vollständig unabhängig voneinander aufzubauen und erst am Ende der Produktionslinie die Hubeinheit in der Führungsrohreinheit zu montieren.

Die Hubeinheit umfasst hierbei neben dem Antriebsmotor insbesondere eine Haltekomponente, die an einer dem Antriebsmotor abgewandten Seite der Hubeinheit und der späteren Hubsäule mit einer entsprechenden Montageplatte mechanisch verbunden wird. Diese dient der Aufnahme bzw. Ableitung der Kräfte der Hubeinheit auf die Montageplatte und damit auf das entsprechende Führungsrohrsegment der Hubsäule.

Optional kann bei einer Montageplatte gemäß einem Ausführungsbeispiel die Aufnahmestruktur derart ausgebildet sein, um die drehfeste Verbindung mit der Haltekomponente bezogen auf eine Drehbewegung um die Erstreckungsrichtung durch eine formschlüssige und/oder kraftschlüssige Verbindung mit der Haltekomponente zu schaffen. Hierdurch kann es möglich sein, mit konstruktiv einfachen Mitteln eine belastbare und widerstandsfähige drehfeste Verbindung zwischen der Hubeinheit und der Montageplatte zu schaffen. Hierbei kommt eine kraftschlüssige oder reibschlüssige Verbindung durch Haftreibung, eine stoffschlüssige Verbindung durch molekulare oder atomare Wechselwirkungen und Kräfte und eine formschlüssige Verbindung durch eine geometrische Verbindung der betreffenden Verbindungspartner zustande. Die Haftreibung setzt somit insbesondere eine Normalkraftkomponente zwischen den beiden Verbindungspartnern voraus.

Bei einer solchen Montageplatte gemäß einem Ausführungsbeispiel kann optional die Aufnahmestruktur senkrecht zu der Erstreckungsrichtung einen polygonalen, beispielsweise quadratischen oder rechteckigen, Querschnitt aufweisen. Durch den Einsatz eines solchen polygonalen Querschnitts kann es möglich sein, eine Montage der Hubeinheit im Zusammenspiel mit der Montageplatte weiter zu vereinfachen, indem die Haltekomponente leichter in die Montageplatte einführbar bzw. an dieser befestigbar ist. Optional kann hierdurch gegebenenfalls zuverlässig auch ein höheres Drehmoment übertragen werden. Als polygonaler Querschnitt kann so beispielsweise ein regelmäßiger, teilweise regelmäßiger oder auch unregelmäßiger ein polygonaler Querschnitt verwendet werden. Ein solcher Querschnitt kann beispielsweise eine ganzzahlige Rotationssymmetrie umfassen, die optional von der Anzahl der Ecken des Polygons abweichen kann, mit dieser jedoch auch übereinstimmen kann.

So kann diese oder auch eine andere Komponente beispielsweise eine n-zählige Rotationssymmetrie aufweisen, wobei n eine natürliche Zahl größer oder gleich 2 ist. Eine n-zählige Rotationssymmetrie liegt dann vor, wenn die betreffende Komponente beispielsweise um eine Rotations- oder Symmetrieachse um (360°/n) drehbar ist und dabei im Wesentlichen formenmäßig in sich selbst übergeht, also bei einer entsprechenden Drehung im Wesentlichen auf sich selbst im mathematischen Sinn abgebildet wird. Im Unterschied hierzu geht bei einer vollständigen rotationssymmetrischen Ausgestaltung einer Komponente bei einer beliebigen Drehung um jeden beliebigen Winkel um die Rotations- oder Symmetrieachse die Komponente formenmäßig im Wesentlichen in sich selbst über, wird also im mathematischen Sinn im Wesentlichen auf sich selbst abgebildet.

Optional kann bei einer Montageplatte gemäß einem Ausführungsbeispiel die Aufnahmestruktur eine Ausnehmung aufweisen, die ausgebildet ist, um die Haltekomponente aufzunehmen. Eine solche Ausgestaltung kann es beispielsweise ermöglichen, die Montage der Hubeinheit an der Montageplatte weiter zu vereinfachen, indem beispielsweise die Haltekomponente im Rahmen der Montage in die Ausnehmung eingeführt und so stabilisiert wird.

Optional kann selbstverständlich die Ausnehmung in der Aufnahmestruktur eine ganzzahlige Rotationssymmetrie aufweisen. Auch hierdurch kann es gegebenenfalls möglich sein, eine Montage der Hubeinheit an der betreffenden Montageplatte zu vereinfachen.

Optional können bei einer Montageplatte gemäß einem Ausführungsbeispiel die Aufnahmestruktur und die Motoraufnahmestruktur auf verschiedenen Seiten einer senkrecht zu der Erstreckungsrichtung verlaufenden Mittenlinie angeordnet sein. Hierdurch kann es möglich sein, die Motoraufnahmestruktur und die Aufnahmestruktur für die Haltekomponente gezielter auf ihre jeweiligen Funktionen hin abzustimmen und so eine größere Belastbarkeit zu erzielen. Ergänzend oder alternativ hierzu kann es gegebenenfalls auch möglich sein, die Montage der Hubeinheit an der Montageplatte weiter zu vereinfachen, da sich hierdurch eine bessere räumliche Trennung der Aufnahmestruktur und der Motoraufnahmestruktur ergeben kann.

Optional kann eine Montageplatte gemäß einem Ausführungsbeispiel ferner eine Befestigungsstruktur umfassen, die ausgebildet ist, um die Montageplatte mit einer der wenigstens zwei Hubsäulensegmente zu verbinden. Bei der entsprechenden Verbindung handelt es sich um eine mechanische Verbindung, nicht jedoch notwendigerweise um eine entsprechende elektrische oder andere informationstragende Verbindung.

Bei einer solchen Montageplatte gemäß einem Ausführungsbeispiel kann die Befestigungsstruktur eine Mehrzahl von Löchern aufweisen, die derart ausgebildet und angeordnet sind, sodass die Montageplatte mit dem einen Hubsäulensegment der wenigstens zwei Hubsäulensegmente verschraubbar ist. Hierdurch kann mit konstruktiv einfachen Mitteln eine stabile mechanische Verbindung zwischen der Montageplatte und dem betreffenden Hubsäulensegment geschaffen werden.

Ergänzend öder alternativ kann bei einer Montageplatte gemäß einem Ausführungsbeispiel die Befestigungsstruktur ein Führungsprofil umfassen, das derart ausgebildet ist, sodass ein Gegenführungsprofil eines Adapterbauteils auf das Führungsprofil schiebbar ist, sodass die Montageplatte über eine Mehrzahl von Löchern in dem Adapterbauteil mit einem Hubsäulensegment der wenigstens zwei Hubsäulensegmente verschraubbar ist. Hierdurch kann es möglich sein, eine flexiblere Montage der Hubeinheit an der Hubsäule bzw. ihren Hubsäulensegmenten zu ermöglichen, da durch den Einsatz eines entsprechenden Adapterbauteils gegebenenfalls auftretende Unterschiede hinsichtlich der Ausdehnung senkrecht zu der Erstreckungsrichtung der Hubsäule aufgefangen bzw. kompensiert werden können.

Eine Montageplatte gemäß einem Ausführungsbeispiel kann hierbei aus einem spritzgießfähigen Material, beispielsweise im Rahmen eines Spritzgießverfahrens gefertigt sein. Hierdurch kann es möglich sein, mit einfachen technischen Mitteln eine stabile und belastbare Montageplatte zu schaffen.

Eine Hubsäule gemäß einem Ausführungsbeispiel kann beispielsweise wenigstens zwei Hubsäulensegmente, die im Wesentlichen konzentrisch ineinander einführbar und zueinander entlang der Erstreckungsrichtung bewegbar sind, eine Hubeinheit sowie eine erste und eine zweite Montageplatte gemäß einem Ausführungsbeispiel aufweisen. Die Hubeinheit ist hierbei in der Hubsäule angeordnet und derart ausgebildet, um eine Länge der Hubsäule parallel zu der Erstreckungsrichtung zu verändern, wobei die Hubeinheit einen Antriebsmotor und an einer dem Antriebsmotor abgewandten Seite eine Haltekomponente aufweist. Der Antriebsmotor der Hubeinheit ist hierbei mit der ersten Montageplatte, die Haltekomponente mit der zweiten Montageplatte verbunden.

Benachbart sind hierbei zwei Objekte, zwischen denen kein weiteres Objekt desselben Typs angeordnet ist. Unmittelbar benachbart sind entsprechende Objekte, wenn sie aneinandergrenzen, also beispielsweise miteinander in Kontakt stehen. Hierbei wird unter einer einstückig ausgebildeten Komponente eine solche verstanden, die genau aus einem zusammenhängenden Materialstück gefertigt ist. Der Begriff "einstückig" kann daher synonym mit den Begriffen "integral" oder "einteilig" verwendet werden. Hierbei umfasst eine mechanische Kopplung zweier Komponenten sowohl eine unmittelbare, wie auch eine mittelbare Kopplung. Elektrische oder andere Komponenten sind hierbei miteinander mittelbar über eine weitere Komponente oder unmittelbar miteinander derart gekoppelt, dass diese einen Signalaustausch zwischen den betreffenden Komponenten ermöglichen. So kann die entsprechende Kopplung abschnittsweise oder vollständig beispielsweise elektrisch, optisch, magnetisch oder mittels Funktechnik implementiert und umgesetzt sein. Trotz des Wortbestandteils "Richtung" kann es sich bei den einzelnen "Richtungen" im vorliegenden Fall nicht notwendigerweise um eine Richtung im mathematischen Sinne eines Vektors, sondern um eine Linie handeln, entlang derer die entsprechende Bewegung erfolgt. Eine solche Linie kann geradlinig, jedoch auch gebogen sein. Abzugrenzen sind hier Richtungen, die tatsächlich Richtungen entlang einer Linie, beispielsweise der Bewegungsrichtung, beschreiben. So kann beispielsweise eine erste Richtung einer zweiten Richtung entgegengerichtet sein, beide jedoch entlang einer auch als Richtung bezeichneten Linie verlaufen oder gerichtet sein.

Nachfolgend werden unter Bezugnahme auf die beigefügten Figuren Ausführungsbeispiele näher beschrieben und erläutert.
- Fig. 1a: zeigt eine perspektivische Darstellung einer Führungsrohreinheit mit zwei Führungsrohrsegmenten, bei der ein inneres Führungsrohrsegment an einem oberen vertikalen Ende angeordnet ist;
- Fig. 1b: zeigt eine perspektivische Darstellung einer Hubsäule mit zwei Führungsrohrsegmenten, bei der ein inneres Führungsrohrsegment an einem vertikal unteren Ende angeordnet ist;
- Fig. 2a: zeigt eine perspektivische Darstellung einer an zwei Montageplatten gemäß einem Ausführungsbeispiel montierten Hubeinheit, bei der der Antriebsmotor an einer vertikal unten angeordneten Montageplatte angebracht ist;
- Fig. 2b: zeigt eine an zwei Montageplatten gemäß einem Ausführungsbeispiel angebrachte Hubeinheit, bei der der Antriebsmotor an einer vertikal oben angeordneten Montageplatte angebracht ist;
- Fig. 3a: zeigt eine perspektivische Darstellung einer Führungsrohreinheit mit zwei Führungsrohrsegmenten;
- Fig. 3b: zeigt eine perspektivische Darstellung einer Montageplatte gemäß einem Ausführungsbeispiel, welche eine Mehrzahl von Löchern zur Verschraubung derselben an einem Führungsrohrsegment umfasst; und
- Fig. 3c: zeigt eine perspektivische Darstellung einer Montageplatte gemäß einem Ausführungsbeispiel mit zwei Adapterbauteilen.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

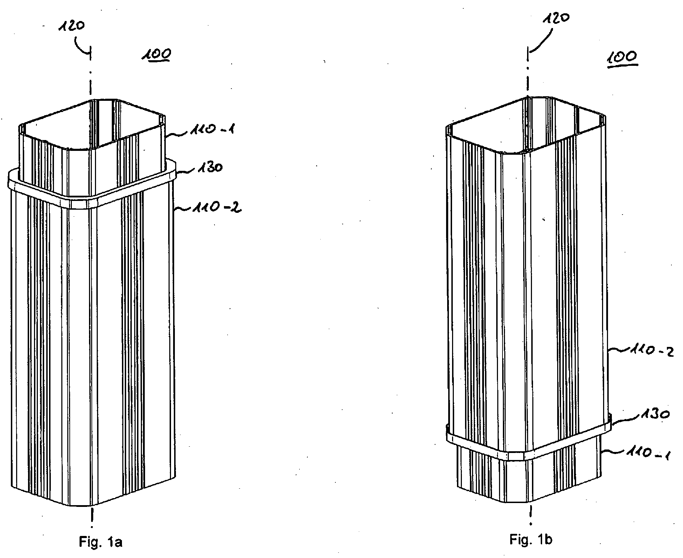

Fig. 1a zeigt eine perspektivische Darstellung einer Führungsrohreinheit 100, welche wenigstens zwei Führungsrohrsegmente 110-1, 110-2 umfasst, die im Wesentlichen konzentrisch zu einer zentralen Achse 120 angeordnet und ineinander einführbar sind. Die zentrale Achse 120 stellt hierbei gleichzeitig eine Erstreckungsrichtung dar, bezüglich derer die Hubsäule hinsichtlich ihrer Länge veränderbar ist.

Aufgrund der konzentrisch ineinander einführbaren Ausgestaltung der beiden Führungsrohrsegmente 110 weist die Führungsrohreinheit 100 ein inneres Führungsrohrsegment und ein äußeres Führungsrohrsegment auf, bei denen es sich um die beiden Führungsrohrsegmente 110-1 und 110-2 in dieser Reihenfolge handelt. Entlang der zentralen Achse 120, also entlang der Erstreckungsrichtung 120, ist zwischen den beiden Führungsrohrsegmenten 110-1, 110-2 eine Abdeckung 130 angeordnet, welche einer Abdichtung des zwischen den Führungsrohrsegmenten 110 bestehenden Spaltes dient. Durch die Abdeckung 130 kann ein Schutz gegen ein Eindringen von Fremdkörpern in den Bereich zwischen den Führungsrohrsegmenten 110 und damit in das Innere der Führungsrohreinheit 100 unterbunden werden.

An dieser Stelle sollte darauf hingewiesen werden, dass die Darstellung der Fig. 1a keine vollständige Hubsäule zeigt, sondern lediglich die Anordnung der beiden Führungsrohrsegmente 110 zueinander wiedergibt. So weist die in Fig. 1a gezeigte Hubsäule beispielsweise keine Hubeinheit und auch keine entsprechenden Montageplatten auf, an denen die Hubeinheit befestigt ist.

Fig. 1a zeigt lediglich ein Beispiel einer Hubsäule 100 gemäß einem Ausführungsbeispiel. Es sollte an dieser Stelle betont werden, dass selbstverständlich Hubsäulen 100 gemäß einem Ausführungsbeispiel auch mehr als zwei Führungsrohrsegmente 110 umfassen können. Diese können radial kaskadiert, also mit unterschiedlichem Abstand von der zentralen Achse 120 (Erstreckungsrichtung) angeordnet sein. Hubsäulen 100 gemäß einem Ausführungsbeispiel weisen so wenigstens zwei entsprechende Führungsrohrsegmente 110 auf, können jedoch auch mehr als die in Fig. 1 a dargestellten zwei Führungsrohrsegmente umfassen.

Fig. 1b zeigt eine Fig. 1a vergleichbare Darstellung einer weiteren Hubsäule 100 gemäß einem Ausführungsbeispiel, bei dem wiederum zur Vereinfachung der Darstellung die Hubeinheit sowie die entsprechenden Montageplatten nicht dargestellt sind. Im Unterschied zu der in Fig. 1a dargestellten Hubsäule 100, bei der das innere Führungsrohrsegment 110-1 sich nach vertikal oben aus dem äußeren Führungsrohrsegment 110-2 hinaus erstreckt, ist bei der in Fig. 1b gezeigten Variante die vertikale Anordnung der beiden Führungsrohrsegmente 110 vertauscht. Anders ausgedrückt handelt es sich bei dem inneren Führungsrohrsegment 110-1 bei dieser Variante um das vertikal unten bzw. untere Führungsrohrsegment 110.

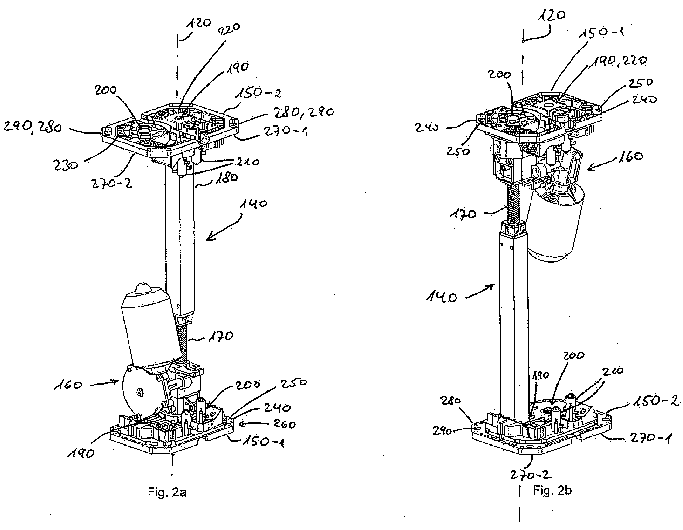

Fig. 2a zeigt eine perspektivische Darstellung einer Hubeinheit 140, die sowohl an einem vertikal oberen, wie auch an einem vertikal unteren Ende jeweils mit einer Montageplatte 150 gemäß einem Ausführungsbeispiel verbunden ist. Wie nachfolgend noch näher erläutert werden wird, handelt es sich bei der Montageplatte 150-1 um eine solche, die in ein inneres Führungsrohrsegment 110-1 einführbar und dort mit diesem befestigbar ist. Im Unterschied hierzu handelt es sich bei der Montageplatte 150-2, bei dem hier im vorliegenden Fall an dem vertikal oberen Ende der Hubeinheit 140 angeordnet ist, um eine Montageplatte 150, die an einem äußeren Führungsrohrsegment 110-2 befestigbar bzw. montierbar ist. Bevor jedoch der genauere Aufbau der Montageplatten 150 näher beschrieben werden soll, wird zunächst die Hubeinheit 140 näher beschrieben, die auch als Antriebseinheit bezeichnet wird.

Die Hubeinheit 140 basiert auf der Verwendung eines Spindelantriebs. So weist die Hubeinheit 140 einen Antriebsmotor 160 auf, der so ausgebildet und angeordnet ist, dass diese eine Gewindespindel 170 in Rotation versetzen kann. Der Antriebsmotor 160 kann hierbei beispielsweise als Elektromotor, gegebenenfalls jedoch auch als pneumatischer oder hydraulischer Motor ausgeführt sein. Die Gewindespindel 170 steht hierbei mit einer Haltekomponente 180 der Hubeinheit 140 derart in Eingriff, sodass bei einer Rotation oder Drehung der Gewindespindel 170 die Haltekomponente 180 sich entlang der Erstreckungsrichtung 120 je nach Drehrichtung der Gewindespindel 170 entfernt oder annähert, wenn die Haltekomponente 180 an einer Rotation gehindert wird. Zu diesem Zweck kann die Haltekomponente 180 beispielsweise eine Mutter, Kugelumlaufmutter oder ein entsprechend anderes Bauteil umfassen, welches im Zusammenspiel mit der Gewindespindel 170 eine Drehbewegung derselben in eine lineare Bewegung entlang der zentralen Achse 120 endet.

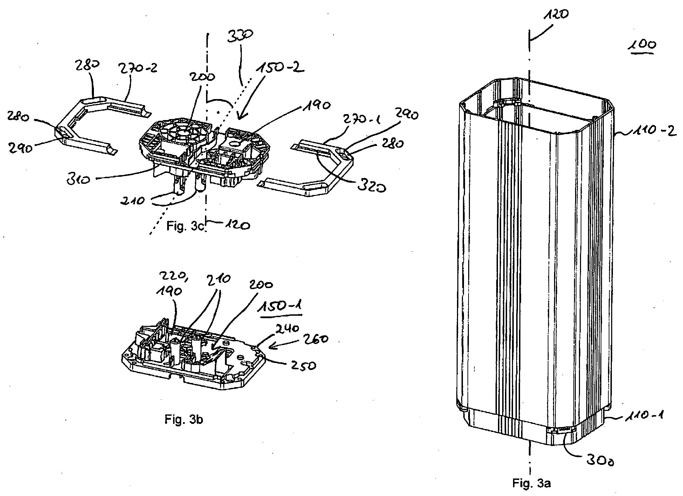

Um nun eine entsprechende Drehbewegung der Haltekomponente 180 gegenüber dem Hubsäulensegment 110 zu unterbinden, weisen die Montageplatten 150 jeweils eine Aufnahmestruktur 190 auf, welche ausgebildet ist, um die Haltekomponente 180 der Hubeinheit 140 aufzunehmen, sodass diese zumindest bezüglich einer Drehbewegung um die Erstreckungsrichtung 120 bzw. einer zu dieser parallelen Achse drehfest ist. Wie später im Zusammenhang mit den Fig. 3a bis 3c noch näher beschrieben werden wird, weist die Aufnahmestruktur 190 zu diesem Zweck eine Ausnehmung auf, die einen polygonalen, im vorliegenden Fall quadratischen Querschnitt aufweist, sodass die drehfeste Verbindung mit der Haltekomponente 180 über eine formschlüssige Verbindung zwischen der Montageplatte 150 und der Haltekomponente 180 zustande kommt.

Neben der Aufnahmestruktur 190 weisen die Montageplatten 150 ferner jeweils eine Motoraufnahmestruktur 200 auf, die ausgebildet ist, um den Antriebsmotor 160 auf der Montageplatte aufzunehmen und eine mechanische Befestigung desselben an der Montageplatte 150 zu ermöglichen. Zu diesem Zweck kann die Motoraufnahmestruktur 200 beispielsweise entsprechende Löcher oder andere Strukturen, beispielsweise säulenartige Fortsätze aufweisen, mit deren Hilfe eine mechanische Fixierung oder Befestigung des Antriebsmotors 160 wenigstens teilweise, gegebenenfalls auch vollständig bewirkt werden kann.

Fig. 2a zeigt ferner zwei Dome 210 zur Kabelführung.

Aufgrund der Anordnung der beiden Montageplatten 150 zeigt hierbei Fig. 2a die Montageplatte 150-2 von einer Rückseite, während die Montageplatte 150-1 von einer Vorderseite gezeigt wird, bei der jedoch die Aufnahmestrukturen 190, 200 von der Hubeinheit 140 wenigstens teilweise verdeckt werden. Deutlich zeigt jedoch Fig. 2a die Ausnehmung 220 von der Rückseite, in der die Haltekomponente 180 eingeführt ist.

Darüber hinaus zeigt die Rückseite der Montageplatte 150-2 in Fig. 2a eine Mehrzahl von Versteifungsstrukturen 230, die beispielsweise als Versteifungsrippen ausgeführt sind. Diese dienen der mechanischen Stabilisierung der Montageplatte 150 und ermöglichen es so beispielsweise, die Montageplatte 150 als Spritzgießteil aus einem spritzgießfähigen Material zu fertigen.

Wie nachfolgend im Zusammenhang mit Fig. 3a bis 3c noch näher beschrieben werden wird, weisen die Montageplatten 150 ferner Befestigungsstrukturen 240 auf, bei denen es sich im Falle der Montageplatte 150-1 um Löcher 250 handelt, mit deren Hilfe die Montageplatte 150-1 an dem betreffenden Hubsäulensegment 110-1 verschraubt werden kann.

Die Löcher 250 bzw. ihre Befestigungsstrukturen 240 sind hierbei an jeweils vier abgeschrägten Bereichen 260 der Montageplatten 150 angeordnet. Auch die Hubsäulensegmente 110, wie sie in Fig. 1a und 1b gezeigt sind, weisen entsprechend abgeschrägte Bereiche im Profil an diesen Stellen auf.

Die Montageplatte 150-2 weist ebenfalls eine Befestigungsstruktur 240 auf, die jedoch in Fig. 2a nicht als solche erkennbar ist. Bei dieser handelt es sich vielmehr um ein Führungsprofil, auf welches ein entsprechendes Gegenführungsprofil eines oder mehrere Adapterbauteile 270-1, 270-2 aufgeschoben werden können, um so eine formschlüssige Verbindung zwischen den Adapterbauteilen 270 und der Montageplatte 150 zu bilden. Die Montageplatte 150-2 kann so als dreiteilig ausgeführte Montageplatte angesehen und verstanden werden.

Die Adapterbauteile 270 weisen hierbei entsprechende Befestigungsstrukturen 280 auf, die ihrerseits wiederum Löcher 290 umfassen, mit deren Hilfe eine Verschraubung der Adapterbauteile 270 und damit der betreffenden Montageplatte 150 an dem Hubsäulensegment 110 erfolgen kann.

Fig. 2b zeigt eine perspektivische Darstellung einer weiteren Hubeinheit 140 und zweier mit dieser verbundener Montageplatten 150-1, 150-2. Im Unterschied zu der in Fig. 2a gezeigten Darstellung ist jedoch der Antriebsmotor 160 nunmehr an dem in vertikaler Richtung, also entlang der Streckurigsrichtung 120 oberen Ende der Hubeinheit 140 angeordnet. So ist auch bei dieser Ausführungsform der Antriebsmotor 160 durch die Motoraufnahmestruktur 200 der am oberen vertikalen Ende angeordneten Montageplatte 150-1 aufgenommen, während die Haltekomponente 180 in der entsprechenden Aufnahmestruktur 190 der gegenüberliegenden Montageplatte 150-2 aufgenommen und befestigt ist. Hierbei ist es eher Zufall, dass es sich bei der oberen Montageplatte 150 wiederum um die Montageplatte 150-1 für das innere Hubsäulensegment 110-1 handelt, während es sich bei am vertikalen unteren Ende angeordneten Montageplatte 150 um die für das äußere Hubsäulensegment 110-2, also um die Montageplatte 150-2 handelt. Selbstverständlich können bei anderen Ausführungsbeispielen auch die Rollen hinsichtlich der Aufnahmestrukturen 190, 200 zwischen den betreffenden Montageplatten 150-1, 150-2 vertauscht sein.

Bei den hier gezeigten Ausführungsbeispielen von Montageplatten 150 und entsprechende Hubsäulen 100 sind daher nicht alle Aufnahmestrukturen 190, 200 einer einzelnen Montageplatte 150 belegt. Genauer gesagt ist bei den hier gezeigten Ausführungsbeispielen jeweils nur eine Aufnahmestruktur der beiden Aufnahmestrukturen 190, 200 mit einem entsprechenden Gegenbauteil, also dem Antriebsmotor 160 bzw. der Haltekomponente 180 belegt. Grundsätzlich könnte es jedoch auch möglich sein, im Falle einer doppelt ausgeführten Hubeinheit 140, beide Haltestrukturen entsprechend mit den für sie vorgesehenen Komponenten zu bestücken. Hierbei kann es gegebenenfalls dann ratsam sein, eine von den bisher gezeigten Anordnungen abweichende Anordnung der betreffenden Aufnahmestrukturen 190, 200 zu implementieren.

Eine Hubsäule umfasst so die auch als Führungsrohreinheit bezeichnete Anordnung der Führungsrohrsegmente 110, von denen es typischerweise ein äußeres und ein inneres Führungsrohrsegment 110 gibt, sowie die auch als Antriebseinheit bezeichneten Hubeinheit 140. Die Hubeinheit 140 umfasst so unter anderem den Antriebsmotor 160 und seine Anschlüsse sowie den Antriebsstrang mit einer gegebenenfalls implementierten Getriebeuntersetzung. Eine solche Hubsäule 100 umfasst typischerweise wenigstens zwei Führungsrohrsegmente 110, wobei konventionell die Hubeinheit 140 stets in der gleichen Orientierung innerhalb der Hubeinheit 140 angeordnet ist. So kann beispielsweise der Antriebsmotor stets mit dem äußeren Führungsrohrsegment verbunden sein. Konventionell sind hierbei die Anschlüsse, also beispielsweise die Zuleitung für die Leistung, typischerweise an die Position des Antriebsmotors 140 gebunden.

Durch den Einsatz eines Ausführungsbeispiels ist es nun möglich, die Hubeinheit 140 der Hubsäule 100 in einer beliebigen Art und Weise aufzubauen. Dies bedeutet, dass die Anschlüsse nicht notwendigerweise an das äußere Führungsrohrsegment 110 angepasst werden müssen. Hierdurch kann sich so eine größere Flexibilität und/oder eine Vereinfachung der Herstellung einer entsprechenden Hubsäule 100 ergeben.

Eine Hubsäule wird also konventionell so aufgebaut, dass die Hubeinheit 140 mit dem Antriebsmotor 160, dem Getriebe und gegebenenfalls weiteren vorhandenen Komponenten, in der Hubsäule 100 in Bezug auf die Anordnung der Führungsrohrsegmente 110 verbaut wird. Die Anordnung der Führungsrohrsegmente 110 konnte konventionell nicht anders aufgebaut werden, da die Anschlüsse an derselben Seite wie auf dem Antriebsmotor anzuordnen waren.

Durch den Einsatz einer Montageplatte 150 und einer Hubsäule gemäß einem Ausführungsbeispiel können nun die Führungsrohrsegmente 110 und die Hubeinheit 140 der Hubsäule 100 im Wesentlichen vollständig und unabhängig voneinander aufgebaut werden. Erst am Ende der Herstellung kann dann die Hubeinheit 140 in die Anordnung der Führungsrohrsegmente 110 dem Kundenwunsch entsprechend integriert werden. Die Montageplatten 150, die auch als obere und untere Basisplatte bezeichnet werden, weisen hierbei das zuvor beschriebene, innovative Design auf, welches eine Befestigung derselben mit oder ohne zusätzliche Teile an dem äußeren und/oder dem inneren Führungsrohrsegment 110 ermöglicht.

Durch den Einsatz von Ausführungsbeispielen kann so ein Aufbausystem geschaffen werden, mit dessen Hilfe es möglich ist, die wesentlichen Hauptkomponenten, also die Hubeinheit 140 sowie die Anordnung der Führungsrohrsegmente 110 unabhängig voneinander vorzufertigen. Dies kann es ebenso ermöglichen, diese separat voneinander zu prüfen und zu testen. Schließlich kann am Ende der Herstellung im Wesentlichen frei entschieden werden, in welcher Art und Weise die Hubeinheit 140 in die Führungsrohrsegmentanordnung integriert werden soll. Hierdurch kann es ebenso möglich sein, im Vergleich mit einem Standardherstellungsverfahren, die Herstellungszeit zu reduzieren.

Teile der Hauptkomponenten müssen hierbei gegebenenfalls nicht verdoppelt werden, um beide Versionen einer Hubsäule herzustellen. Der Kunde kann so im Endeffekt entscheiden, auf welcher Seite der Hubsäule 100 der Antriebsmotor 160 anzuordnen ist. Das Gewicht, welches mit dem Antriebsmotor 160 einhergeht, kann so frei an eine Montageplatte 150 angebracht bzw. dieser zugeordnet werden, sodass eine gezielte Beeinflussung von entstehenden Vibrationen und entstehendem Geräusch beeinflusst werden kann.

Fig. 3a zeigt erneut eine Fig. 1b vergleichbare Darstellung einer Hubsäule 100 bzw. einer entsprechenden Anordnung von Führungsrohrsegmenten 110-1, 110-2, wobei es sich erneut bei dem Führungsrohrsegment 110-1 um das innere Führungsrohrsegment, bei dem Führungsrohrsegment 110-2 um das äußere Führungsrohrsegment 110 handelt. Im Unterschied zu der Darstellung in Fig. 1b ist bei der in Fig. 3b gezeigten Darstellung die Abdeckung 130 nicht gezeigt. Entsprechend zeigt Fig. 3a im Vergleich zu der Darstellung in Fig. 1b mehrere Montagestrukturen 300, mit deren Hilfe beispielsweise die Abdeckung 130 befestigbar ist.

Fig. 3b zeigt eine perspektivische Darstellung der Montageplatte 150-1, wie sie beispielsweise bereits im Zusammenhang mit den Figuren 2a und 2b zu sehen war. Im Unterschied zu den dort gezeigten Darstellungen ist jedoch bei der in Fig. 3b gezeigten Darstellung die Hubeinheit 140 zusammen mit dem Antriebsmotor 160 nicht gezeigt, sodass Fig. 3b einen deutlicheren Einblick auf die Aufnahmestruktur 190 für die Haltekomponente 180 und die Motoraufnahmestruktur 200 für den Antriebsmotor 160 ermöglicht.

Auch zeigt Fig. 3b wiederum die zwei Dome 210 zum Führen einer Verkabelung.

Im Hinblick auf die Aufnahmestruktur 190 zeigt Fig. 3b ferner die Ausprägung derselben als im Wesentlichen quadratische Ausnehmung 220, welche sich in die betreffende Montageplatte 150-1 hinein erstreckt. Die Ausnehmung 220 weist so eine regelmäßige polygonale Querschnittsform auf, die eine ganzzahlige Symmetrie aufweist. Genauer gesagt weist die Ausnehmung 220 im vorliegenden Fall eine quadratische Querschnittsform auf, weist also eine vier-zählige Rotationssymmetrie auf. Bei anderen Ausführungsbeispielen kann selbstverständlich die Aufnahmestruktur 190 auch anders als durch eine entsprechende Ausnehmung 220 umgesetzt sein. Aber selbst wenn es sich um eine entsprechende Ausnehmung 220 handelt, kann diese gegebenenfalls auch mithilfe einer anderen geometrischen Ausgestaltung umgesetzt werden, bei der beispielsweise eine rechteckige Querschnittsform verwendet wird.

Fig. 3b zeigt ferner im Bereich der abgeschrägten Bereiche 260 die Befestigungsstrukturen 240 mit ihren Löchern 250, über die die Montageplatte 150-1 an dem betreffenden Führungsrohrsegment 110 verschraubbar ist.

Fig. 3c zeigt schließlich die Montageplatte 150-2 mit den bereits zuvor erläuterten Strukturen, die beispielsweise die beiden Aufnahmestrukturen 190, 200 für die Haltekomponente 180 und den Antriebsmotor 160 umfassen. Ebenso zeigt Fig. 3c ebenso die Befestigungssäulen 210 der Motoraufnahmestruktur 200.

Fig. 3c zeigt jedoch darüber hinaus das Führungsprofil 310, mit dessen Hilfe und einem entsprechenden Gegenführungsprofil 320 die Adapterbauteile 270-1 und 270-2 auf die Montageplatte 150-2 aufschiebbar sind. Hierdurch ist es möglich, über die Befestigungsstrukturen 280 der Adapterbauteile 270 und ihre Löcher 290 in dem aufgeschobenen Zustand derselben auf die Montageplatte 150-2 die entsprechende Anordnung in dem Hubsäulensegment 110-2 zu verschrauben.

Rechnet man so die Adapterbauteile 270 der Montageplatte 150 hinzu, handelt es sich bei der so entstehenden Montageplatte 150 entsprechend um eine dreiteilig ausgeführte Fassung. Selbstverständlich können bei anderen Ausführungsbeispielen auch mehr oder weniger als zwei Adapterbauteile 270 zum Einsatz kommen. Ebenso könnten gegebenenfalls andere als die beschriebenen Führungsprofile und Gegenführungsprofile 310, 320 zur mechanischen Verbindung der Adapterbauteile 270 und der Montageplatte 150 verwendet werden.

Um eine entsprechende Anordnung der Aufnahmestruktur 190 und der Motoraufhahmestruktur 200 zu ermöglichen, sind diese bei den hier gezeigten Ausführungsbeispielen derart angeordnet, sodass eine Mittenlinie 330, welche senkrecht auf der Erstreckungsrichtung 120, also der zentralen Achse 120 steht, die Montageplatte 150 derart in zwei Seiten aufteilt, sodass auf jeder der beiden Seiten genau eine der beiden Aufnahmestrukturen 190, 200 angeordnet ist. Die Mittenlinie 330 muss hierbei nicht senkrecht zu einer der Seitenflächen der betreffenden Montageplatte 150 verlaufen, wie dies jedoch im Zusammenhang mit Fig. 3c eingezeichnet ist. Eine entsprechende Mittenlinie 330 lässt sich ebenso bei den anderen hier beschriebenen Montageplatten 150 finden, stellt jedoch bei Weitem kein zwingendes Merkmal eines Ausführungsbeispiels einer Montageplatte 150 dar. So können gegebenenfalls auch Teile der Motoraufnahmestruktur 200 auf der gleichen Seite wie die der Aufnahmestruktur 190 angeordnet sein.

Ausführungsbeispiele einer Montageplatte 150 und einer entsprechenden Hubsäule 100 können es so ermöglichen, ein flexibles Fertigungssystem zu schaffen, bei dem die Hubeinheit 140, also die Antriebseinheit der Hubsäule 100, in verschiedenen, variablen Anordnungen und Versionen den Ansprüchen eines Kunden gemäß in einer Hubsäule 100 integriert werden kann. So kann beispielsweise der Antriebsmotor 160 sowohl im Bereich der oberen wie auch im Bereich der unteren Montageplatte 150 angeordnet sein. Ausführungsbeispiele können beispielsweise im Zusammenhang mit elektrisch betriebenen Antriebsmotoren 160 implementiert werden, sind jedoch bei Weitem nicht auf diese Antriebstechnik beschränkt. So können ebenso entsprechende hydraulische und/oder pneumatische Aktuatoren oder Motoren zum Einsatz gebracht werden.

Durch den Einsatz eines Ausführungsbeispiels kann es möglich sein, eine Herstellung einer Hubsäule 100 gemäß einem Ausführungsbeispiel zu vereinfachen und/oder flexibler zu gestalten.

### Bezugszeichenliste

- 100: Führungsrohreinheit
- 110: Führungsrohrsegment
- 120: zentrale Achse/Erstreckungsrichtung
- 130: Abdeckung
- 140: Hubeinheit
- 150: Montageplatte
- 160: Antriebsmotor
- 170: Gewindespindel
- 180: Haltekomponente
- 190: Aufnahmestruktur
- 200: Motoraufnahmestruktur
- 210: Befestigungsstruktur
- 220: Ausnehmung
- 230: Verstärkungsstruktur
- 240: Befestigungsstruktur
- 250: Loch
- 260: Abgeschrägter Bereich
- 270: Adapterbauteil
- 280: Befestigungsstruktur
- 290: Loch
- 300: Montagestruktur
- 310: Führungsprofil
- 320: Gegenführungsprofil
- 330: Mittenlinie

## Patentansprüche

1. Hubsäule mit folgenden Merkmalen:
wenigstens zwei Führungsrohrsegmenten (110), die im Wesentlichen konzentrisch ineinander einführbar und zueinander entlang der Erstreckungsrichtung (120) bewegbar sind;
einer Hubeinheit (140), die in der Hubsäule angeordnet und ausgebildet ist, um eine Länge der Hubsäule parallel zu der Erstreckungsrichtung (120) zu verändern, wobei die Hubeinheit (140) einen Antriebsmotor (160) und an einer dem Antriebsmotor (160) abgewandten Seite eine Haltekomponente (180) aufweist;
einer ersten Montageplatte (150); und
einer zweiten Montageplatte (150),
wobei der Antriebsmotor (160) der Hubeinheit (140) mit der ersten Montageplatte (150) und die Haltekomponente (180) mit der zweiten Montageplatte (150) verbunden ist; **dadurch gekennzeichnet, dass**
die erste und die zweite Montageplatte (150) jeweils eine Motoraufnahmestruktur (200) für einen Antriebsmotor (160) der Hubeinheit (140) und eine von der Motoraufnahmestruktur (200) verschiedenen Aufnahmestruktur (190) für die drehfest mit der Montageplatte (150) zu verbindende Haltekomponente (180) der Hubeinheit (140) aufweist, wobei die Haltekomponente (180) an einer dem Antriebsmotor (160) abgewandten Seite der Hubeinheit (140) angeordnet ist.

2. Hubsäule nach Anspruch 1, bei der die Aufnahmestruktur (190) der ersten und der zweiten Montageplatte (150) derart ausgebildet ist, um die drehfeste Verbindung mit der Haltekomponente (180) bezogen auf eine Drehbewegung um die Erstreckungsrichtung (120) durch eine formschlüssige und/oder kraftschlüssige Verbindung mit der Haltekomponente (180) zu schaffen.

3. Hubsäule nach Anspruch 2, bei der die Aufnahmestruktur (190) der ersten und der zweiten Montageplatte (150) senkrecht zu der Erstreckungsrichtung (120) einen polygonalen, beispielsweise quadratischen oder rechteckigen, Querschnitt aufweist.

4. Hubsäule nach einem der Ansprüche 2 oder 3, bei der die Aufnahmestruktur (190) der ersten und der zweiten Montageplatte (150) eine Ausnehmung (220) aufweist, die ausgebildet ist, um die Haltekomponente (180) aufzunehmen.

5. Hubsäule nach einem der vorhergehenden Ansprüche, bei der die Aufnahmestruktur (190) und die Motoraufnahmestruktur (200) der ersten und der zweiten Montageplatte (150) auf verschiedenen Seiten einer senkrecht zu der Erstreckungsrichtung (120) verlaufenden Mittenlinie (330) angeordnet sind.

6. Hubsäule nach einem der vorhergehenden Ansprüche, die ferner eine Befestigungsstruktur (240) umfasst, die ausgebildet ist, um die erste und/oder die zweite Montageplatte (150) mit einer der wenigstens zwei Führungsrohrsegmenten (110) zu verbinden.

7. Hubsäule nach Anspruch 6, bei der die Befestigungsstruktur (240) eine Mehrzahl von Löchern (250) aufweist, die derart ausgebildet und angeordnet sind, sodass die erste und/oder die zweite Montageplatte (150) mit dem einen Führungsrohrsegment (110) der wenigstens zwei Führungsrohrsegmenten (110) verschraubbar ist.

8. Hubsäule nach einem der Ansprüche 6 oder 7, bei der die Befestigungsstruktur (240) ein Führungsprofil (310) umfasst, das derart ausgebildet ist, sodass ein Gegenführungsprofil (320) eines Adapterbauteils (270) auf das Führungsprofil (310) schiebbar ist, sodass die erste und/oder die zweite Montageplatte (150) über eine Mehrzahl von Löchern (290) in dem Adapterbauteil (270) mit dem oder einem anderen Führungsrohrsegment (110) der wenigstens zwei Führungsrohrsegmenten (110) zu verschraubbar ist.

9. Hubsäule nach einem der vorhergehenden Ansprüche, bei der die erste und/oder die zweiten Montageplatte (150) aus einem spritzgieß fähigen Material gefertigt sind.

## Claims

1. Lifting column with the following features:
at least two guide tube segments (110), which are concentrically insertable one inside the other and movable with respect to one another along the direction of extent (120),
a lifting unit (140) which is arranged in the lifting column and is designed for varying a length of the lifting column parallel to the direction of extent (120), wherein the lifting unit (140) has a drive motor (160) and a holding component (180), on a side facing away from the drive motor (160);
a first mounting plate (150); and
a second mounting plate (150),
wherein the drive motor (160) of the lifting unit (140) is connected to the first mounting plate (150) and the holding component (180) is connected to the second mounting plate (150); **characterized in that**
the first and the second mounting plate (150) each have a motor receiving structure (200) for a drive motor (160) of the lifting unit (140), and a receiving structure (190), which differs from the motor receiving structure (200), for the holding component (180), which is to be connected rotationally conjointly to the mounting plate (150), of the lifting unit (140),
wherein the holding component (180) is arranged on a side of the lifting unit (140) facing away from the drive motor (160).

2. Lifting column according to Claim 1, in which the receiving structure (190) of the first and the second mounting plate (150) is designed in order to provide the rotationally conjoint connection to the holding component (180) with respect to a rotational movement about the direction of extent (120) by a form-fitting and/or force-fitting connection to the holding component (180).

3. Lifting column according to Claim 2, in which the receiving structure (190) of the first and the second mounting plate (150) has a polygonal, for example square or rectangular, cross section perpendicularly to the direction of extent (120).

4. Lifting column according to either of Claims 2 and 3, in which the receiving structure (190) of the first and second mounting plate (150) has a recess (220) which is designed in order to receive the holding component (180).

5. Lifting column according to one of the preceding claims, in which the receiving structure (190) and the motor receiving structure (200) of the first and the second mounting plate (150) are arranged on different sides of a centre line (330) running perpendicularly to the direction of extent (120).

6. Lifting column according to one of the preceding claims, which furthermore comprises a fastening structure (240) which is designed in order to connect the first and/or the second mounting plate (150) to one of the at least two guide tube segments (110).

7. Lifting column according to Claim 6, in which the fastening structure (240) has a plurality of holes (250) which are designed and arranged in a manner such that the first and/or the second mounting plate (150) can be screwed to the one guide tube segment (110) of the at least two guide tube segments (110).

8. Lifting column according to either of Claims 6 and 7, in which the fastening structure (240) comprises a guide profile (310) which is designed in a manner such that a mating guide profile (320) of an adapter component (270) is pushable onto the guide profile (310) such that the first and/or the second mounting plate (150) can be screwed via a plurality of holes (290) in the adapter component (270) to the or another guide tube segment (110) of the at least two guide tube segments (110).

9. Lifting column according to one of the preceding claims, in which the first and/or the second mounting plate (150) are manufactured from an injection-mouldable material.

## Revendications

1. Colonne de levage, comprenant les caractéristiques suivantes :
au moins deux segments tubulaires de guidage (110) qui peuvent être introduits essentiellement concentriquement l'un dans l'autre et peuvent être déplacés l'un vers l'autre le long de la direction d'étendue (120) ;
une unité de levage (140) qui est disposée et réalisée dans la colonne de levage de manière à modifier une longueur de la colonne de levage parallèlement à la direction d'étendue (120),
l'unité de levage (140) présentant un moteur d'entraînement (160) et, au niveau d'un côté opposé au moteur d'entraînement (160), un composant de retenue (180) ;
une première plaque de montage (150) ; et
une deuxième plaque de montage (150),
le moteur d'entraînement (160) de l'unité de levage (140) étant connecté à la première plaque de montage (150) et le composant de retenue (180) étant connecté à la deuxième plaque de montage (150),
**caractérisée en ce que**
la première et la deuxième plaque de montage (150) présentent à chaque fois une structure de logement de moteur (200) pour un moteur d'entraînement (160) de l'unité de levage (140) et une structure de réception (190) différente de la structure de logement de moteur (200) pour le composant de retenue (180) de l'unité de levage (140) devant être connecté de manière solidaire en rotation à la plaque de montage (150), le composant de retenue (180) étant disposé au niveau d'un côté de l'unité de levage (140) opposé au moteur d'entraînement (160).

2. Colonne de levage selon la revendication 1, dans laquelle la structure de réception (190) de la première et de la deuxième plaque de montage (150) est réalisée de manière à ce que la connexion solidaire en rotation au composant de retenue (180) par rapport à un mouvement de rotation autour de la direction d'étendue (120) soit créée par une connexion par engagement par correspondance de formes et/ou par force au composant de retenue (180).

3. Colonne de levage selon la revendication 2, dans laquelle la structure de réception (190) de la première et de la deuxième plaque de montage (150) présente, perpendiculairement à la direction d'étendue (120), une section transversale polygonale, par exemple quadratique ou rectangulaire.

4. Colonne de levage selon l'une quelconque des revendications 2 ou 3, dans laquelle la structure de réception (190) de la première et de la deuxième plaque de montage (150) présente un évidement (220) qui est réalisé de manière à recevoir le composant de retenue (180).

5. Colonne de levage selon l'une quelconque des revendications précédentes, dans laquelle la structure de réception (190) et la structure de logement de moteur (200) de la première et de la deuxième plaque de montage (150) sont disposées sur des côtés différents d'un axe médian (330) s'étendant perpendiculairement à la direction d'étendue (120).

6. Colonne de levage selon l'une quelconque des revendications précédentes, comprenant en outre une structure de fixation (240) réalisée afin de connecter la première et/ou la deuxième plaque de montage (150) à l'un des au moins deux segments tubulaires de guidage (110).

7. Colonne de levage selon la revendication 6, dans laquelle la structure de fixation (240) présente une pluralité de trous (250) qui sont réalisés et disposés de telle sorte que la première et/ou la deuxième plaque de montage (150) puissent être vissées à l'un des segments tubulaires de guidage (110) des au moins deux segments tubulaires de guidage (110).

8. Colonne de levage selon l'une quelconque des revendications 6 ou 7, dans laquelle la structure de fixation (240) comprend un profilé de guidage (310) qui est réalisé de telle sorte qu'un profilé de guidage conjugué (320) d'un composant adaptateur (270) puisse être glissé sur le profilé de guidage (310) de telle sorte que la première et/ou la deuxième plaque de montage (150) puissent être vissées par le biais d'une pluralité de trous (290) dans le composant adaptateur (270) avec le ou un autre segment tubulaire de guidage (110) des au moins deux segments tubulaires de guidage (110).

9. Colonne de levage selon l'une quelconque des revendications précédentes, dans laquelle la première et/ou la deuxième plaque de montage (150) sont fabriquées en un matériau pouvant être moulé par injection.
